# EUROPÄISCHE PATENTANMELDUNG

(11) **EP 1 465 312 A2**
(43) Veröffentlichungstag der Anmeldung: **06.10.2004**
(21) Anmeldenummer: 04001110.8
(22) Anmeldetag: 20.01.2004
(51) Int. Cl.: H02G 15/103, H02G 15/184

(54) **Verbindung von Hochspannungskabeln**

(30) Priorität: 01.04.2003 DE 10314822
(71) Anmelder: SEFAG Ixosil AG, 6460 Altdorf (CH)
(72) Erfinder: Kempf, Urs, 6473 Erstfeld (CH); Ferrazza, Enrico, 6460 Altdorf (CH); Ansorge, Samuel, 6060 Sarnen (CH)
(74) Vertreter: Lippich, Wolfgang, Dipl.-Phys, Dr.rer.nat.

(57) **Zusammenfassung**

Eine Hochspannungsmuffe (1) zur Verbindung von Hochspannungskabeln, weist einen Isolierkörper (12), ein in dessen Inneren liegendes Feldsteuerelement (11), und eine Stützhülse (9) auf. Diese dient der Abstützung des Feldsteuerelements (11) nach innen gegen einen Raum (7) zur Aufnahme eines Leiterverbindungsteils (8). Die Stützhülse (9) wird durch ein mit Biegelinien (16) versehenes Blech (15) gebildet.

## Beschreibung

Die Erfindung betrifft die Verbindung von Hochspannungskabeln.

### HINTERGRUND DER ERFINDUNG

Zur elektrischen Verbindung zweier Hochspannungskabel oder zweier Adern von zwei mehradrigen Hochspannungskabeln ist die Verwendung vorgefertigter Hochspannungsmuffen bekannt, z.B. aus der DE 16 65 222 B2. Die Leiter der zu verbindenden Adern werden an den Aderenden von Isoliermaterial freigelegt. Die blanken Leiterenden werden dann durch ein Leiterverbindungsteil elektrisch verbunden. Um das Leiterverbindungsteil herum wird ein im wesentlichen zylindrischer Isolierkörper angeordnet. Dieser ist in seinem Inneren mit einem Feldsteuerelement (in der DE 16 65 222 B2 als "Abschirmzylinder" bezeichnet) ausgerüstet, welches elektrisch mit den Leitern der Adern verbunden ist, wodurch der radial innerhalb des Feldsteuerelements liegende Raum feldfrei ist. Dies ermöglicht die Verwendung von Verbindungsteilen, welche an der Oberfläche geringe Krümmungsradien (z.B. Spitzen und Kanten) aufweisen können, wie dies z.B. Preßverbindern im allgemeinen der Fall ist.

Aus der EP 0 199 742 ist eine Hochspannungsmuffe bekannt, bei der das Feldsteuerelement (dort "Deflektor" genannt) nach innen, d.h. zum Leiterverbindungsteil hin, auf einer Stützhülse (genannt "Adaptor") aufliegt. Die Stützhülse ist aus zwei vorgeformten (offenbar z.B. gegossenen) Halbzylindern aufgebaut.

Aus der EP 1 010 227 B1, nach der der Oberbegriff des Anspruchs 1 gebildet wurde, ist eine Hochspannungsmuffe bekannt, bei der zur Abstützung des Feldsteuerelements ein in Kreiszylinderform gebogenes Blech vorgesehen ist.

Über dem Feldsteuerelement ist üblicherweise eine Isolierschicht angeordnet, die wiederum auf ihrer Außenseite mit einer auf Erdpotential liegenden Leitschicht (z.B. aus "halbleitendem" Material) versehen ist. Zum Schutz weist eine solche Muffen i.a. noch eine isolierenden Umhüllung auf, z.B. gemäß der DE 298 03 701 U1 eine wärmeschrumpfbare Manschette aus Preßpappe oder Kunststoff, die zum leichteren Aufrollen und zur Erhöhung der Längsstabilität mit Falzungen oder Wellungen versehen sein kann.

### ZUSAMMENFASSUNG DER ERFINDUNG

Die Erfindung ist gemäß einem ersten Aspekt auf eine Hochspannungsmuffe zur Verbindung von Hochspannungskabeln gerichtet. Die Hochspannungsmuffe gemäß dem ersten Aspekt umfaßt folgendes: einen Isolierkörper, ein in dessen Inneren liegendes Feldsteuerelement, und eine Stützhülse zur Abstützung des Feldsteuerelements nach Innen gegen einen Raum zur Aufnahme eines Leiterverbindungsteil. Die Stützhülse wird durch ein Blech gebildet. Das Blech der Stützhülse ist ein mit Biegelinien versehenes Blech ist

Ein weiterer Aspekt ist auf ein Verfahren zur Herstellung einer Hochspannungskabelverbindung gerichtet, welches folgende Schritte umfaßt: Abisolieren der Leiter von zu verbindenden Hochspannungskabel-Adern im Verbindungsbereich, Verbinden der abisolierten Leiter durch ein Leiterverbindungsteil, Aufbringen einer Stützhülse durch Biegen eines mit Biegelinien versehenen Bleches um den Verbindungsbereich, Überschieben eines Isolierkörper mit einem Feldsteuerelement über die Stützhülse.

Ein weiterer Aspekt ist auf die Verwendung eines mit Biegelinien versehenen Bleches als Stützhülse bei der Verbindung von Hochspannungskabeln mit einer Hochspannungsmuffe gerichtet. Die Hochspannungsmuffe umfaßt einen Isolierkörper und ein in dessen Inneren liegendes Feldsteuerelement. Die Stützhülse dient zur Abstützung des Feldsteuerelements nach Innen gegen einen Raum zur Aufnahme eines Leiterverbindungsteils. Die Stützhülse wird durch Biegen des Blechs gebildet.

### BESCHREIBUNG DER ZEICHNUNG

Ausführungsformen der Erfindung werden nun beispielhaft und unter Bezugnahme auf die angefügte Zeichnung beschrieben, in der:
- Fig. 1: ein schematischer Längsschnitt einer Hochspannungsmuffe ist;
- Fig. 2: verschiedene Ansichten eines Stützhülsen-Blechs im noch nicht gebogenen Zustand zeigt;
- Fig. 3: Querschnitte der Stützhülse mit darin liegendem Leiter in drei verschiedenen Ausführungsformen zeigt;
- Fig. 4: Ausschnitte von Längsschnitten darstellt, welche bei den drei Ausführungsformen von Fig. 3 die mechanische Verbindung von Stützhülse und Aderisolierung zeigen;
- Fig. 5: einen Ausschnitt aus einem Längsschnitt einer Hochspannungsmuffe mit Stützhülse einer Ausführungsform ähnlich Fig. 1 zeigt.

### BESCHREIBUNG DER BEVORZUGTEN AUSFÜHRUNGSFORMEN

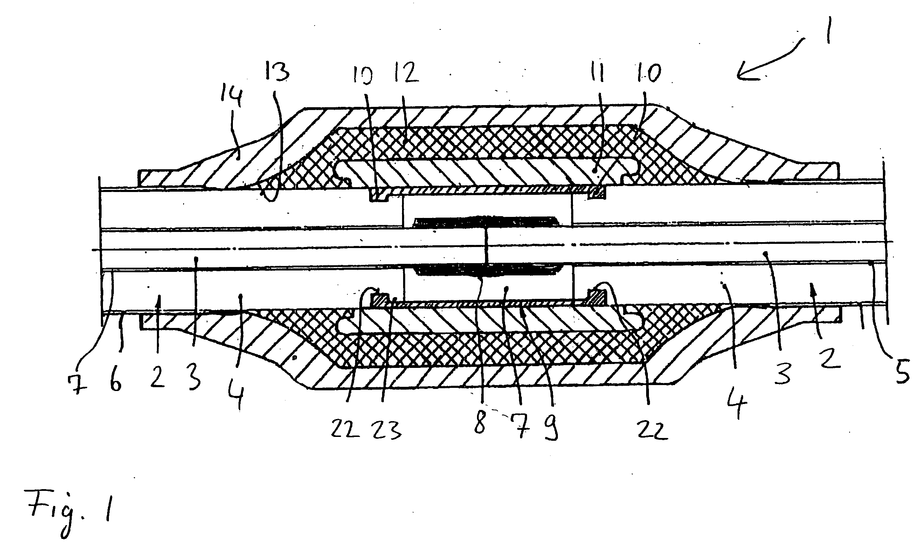

Fig. 1 ist ein schematischer Längsschnitt einer Hochspannungsmuffe. Vor einer ausführlichen Erläuterung von Fig. 1 folgen zunächst einige Anmerkungen zu den Ausführungsformen.

Unter Hochspannungsmuffen und Hochspannungskabeln werden bei den Ausführungsformen Muffen und Kabeln für Kabelnennspannungen größer 0,6/1 kV verstanden (wobei der erste Spannungswert die Nennspannung zwischen einem Leiter und Erde und der zweite Spannungswert die Nennspannung zwischen zwei Leitern eines Dreiphasensystems angibt). Manche der Ausführungsformen sind für Hochspannungen im engeren Sinn (also oberhalb des sog. Mittelspannungsbereichs) ausgelegt, d.h. für Kabel-Nennspannungen größer als 26/45 kV.

Bei den Ausführungsformen handelt es sich bei den zu verbindenden Kabeln um einadrige Kabel; möglich sind aber auch mehradrige Kabel, wobei die beschriebenen Ausführungsformen der Hochspannungsmuffe dann jeweils zwei Einzeladern miteinander verbinden.

Bei den zu verbindenden Kabeln handelt es sich in den Ausführungsformen um Radialfeldkabel mit Kunststoffisolierung. Derartige Kabel haben einen inneren Leiter, ggf. eine diesen umschließende innere Leitschicht, darüber eine Kunststoffisolierung mit einer äußeren Leitschicht sowie ggf. eine diese umschließende Schutzhülle. Zwischen dem inneren Leiter bzw. der inneren Leitschicht und der äußeren Leitschicht ergibt sich somit bei kreiszylindrischem Aufbau ein radialer Feldverlauf. Der innere Leiter ist z.B. aus Kupfer oder Aluminium gefertigt. Die Isolierung ist z.B. aus Polyethylen (PE) oder vernetztem Polyethylen (VPE) gefertigt. Die Leitschichten werden beispielsweise aus einem vernetzten, rußgefüllten Copolymercompound gebildet. Sie dienen hauptsächlich der Errichtung definierter Potentiale, nicht jedoch dem Stromtransport. Aus diesem Grunde brauchen sie keine besonders hohe elektrische Leitfähigkeit aufzuweisen, so daß sie oft auch als "halbleitend" bezeichnet werden. Ein aus Leiter, Isolierkörper und Leitschichten aufgebautes Kabelelement bildet eine "Ader".

Zum Verbinden zweier Hochspannungsadern wird die Aderisolierung einschließlich der Leitschichten über eine gewisse Länge an den Aderenden entfernt. Die so freigelegten Leiter werden mit einem Verbindungsteil, z.B. einer Preßhülse oder Schraubhülse oder einer Löt- oder Schweißverbindung elektrisch und mechanisch verbunden. Der durch das Entfernen der Aderisolierungen entstandene Raum bleibt bei einigen der Ausführungsformen frei, bildet also einen Hohlraum; bei anderen Ausführungsformen kann dieser Raum ausgegossen werden.

Durch die Unterbrechung der Aderisolierung mit den äußeren Leitschichten fehlt nicht nur ein Stück der Isolierung, sondern es ist auch der längs der unverletzten Ader vorgegebene homogene Radialfeldverlauf gestört. Die Hochspannungsmuffe dient dazu, dies zu heilen.

Die Ausführungsformen der Hochspannungsmuffen weisen hierzu einen Isolierkörper mit einem zylindrischen Durchgangsloch auf, welcher nach Herstellen der Leiterverbindung sowie Anbringen einer Stützhülse (wird unten erläutert) über die Verbindungsstelle geschoben wird (hierzu wird der Isolierkörper vor Herstellen der Leiterverbindung auf eine der beiden Adern geschoben und dort geparkt, bis die Leiterverbindung hergestellt und die Stützhülse aufgebracht ist). Der Isolierkörper ist bei den Ausführungsformen aus einem elastischen Isoliermaterial, z.B. Silikongummi gefertigt und mit einer äußeren Leitschicht versehen. Er ersetzt damit die im Verbindungsbereich entfernte Aderisolierung und Leitschicht.

Im Inneren des Isolierkörpers liegt wenigstens ein Feldsteuerelement. Bei den Ausführungsformen ist dieses Feldsteuerelement in den Isolierkörper integriert. Bei einigen der Ausführungsformen ist es - wie der Isolierkörper - aus einem elastischen Material, vorzugsweise aus dem gleichen elastischen Material wie der Isolierkörper (z.B. Silikongummi) gefertigt. Hierdurch wird erreicht, daß sich Isolierkörper und Feldsteuerelement hinsichtlich thermischer Ausdehnung gleich verhalten. Um die elektrische Funktion der Feldsteuerung zu erfüllen, ist das Feldsteuerelement entweder in seinem ganzen Volumen oder zumindest an den äußeren Grenzflächen mit leitfähigem Material versetzt, und das (halb-)leitende Volumen bzw. die (halb-)leitende Grenzfläche sind mit dem Leiterpotential verbunden. Das Feldsteuerelement überdeckt den Verbindungsbereich und setzt damit gewissermaßen die im unverletzten Kabel zur Definition des Radialfelds vorliegende Leiteroberfläche bzw. innere Leitschicht über die Verbindungsstelle fort. Das Feldsteuerelement ist hierzu mit ausreichend großen Krümmungsradien so geformt, daß die Ausbildung übermäßig hoher Feldstärken vermieden wird. Insgesamt bewirkt somit der Isolierkörper mit der Feldsteuereinheit einen ausreichend homogenen Verlauf des elektrischen Feldes über die Verbindungsstelle hinweg.

Das Durchgangsloch im Isolierkörper mit dem Feldsteuerelement ist im allgemeinen mit einem etwas kleineren Durchmesser ausgeführt als der Durchmesser der zu verbindenden Adern. Bei der Montage kommt es also zu einer Aufdehnung des Isolierteils, womit eine Anpressung des Isoliermaterials bzw. des Materials des Feldsteuerelements an die Ader gewährleistet werden soll, beispielsweise um etwaige Lufteinschlüsse zu vermeiden. Die bei den Ausführungsformen vorgesehene Stützhülse überbrückt den abisolierten Verbindungsabschnitt. Hierzu entspricht ihr Durchmesser im wesentlichen dem Aderdurchmesser. Die Stützhülse stützt somit das Feldsteuerelement nach innen gegen den z.B. hohlen Raum mit der Leiterverbindung ab, und verhindert somit, daß sich der Isolierkörper mit dem Feldsteuerelement unter dem Anpreßdruck in diesen Raum einbuchtet.

Die elektrisch leitende Stützhülse ist nicht ein vorgeformtes (etwa gegossenes) Teil, sondern wird aus einem Blech gebogen, das mit Biegelinien (z.B. längserstreckten Querschnittsminderungen) versehen ist. Das Stützhülsen-Blech ist aus einem geeignet biegsamen Material gefertigt, z.B. aus Aluminium. Bei einigen der Ausführungsformen sind die Biegelinien durch Ausfräsungen in den Stützhülsen-Blech hergestellt. Alternativ können die Biegelinien z.B. bereits bei der Blechherstellung vorgesehen oder durch spanlose Umformung eingebracht werden. Aufgrund der Biegelinien kann das Blech ohne großen Kraftaufwand, und damit ohne Spezialwerkzeug (sondern z.B. von Hand), zu der Hülse mit dem gewünschten Durchmesser gebogen werden. Dies kann z.B. unmittelbar bei der Montage der Hochspannungsmuffe erfolgen, so daß diese vom Hersteller mit einem noch ungebogenen Stützhülsen-Blech geliefert werden kann. Natürlich ist es ebenfalls möglich, das Blech bereits beim Hersteller oder in einem Vor-Installationsschritt vorzubiegen. Das Blech ist dann noch über den Verbindungsbereich zu setzen und zur Erreichung des endgültigen Stützhülsen-Durchmessers fertig zu biegen. Wenn die Hülse zum Anpassen an den jeweils benötigten Durchmesser an den längsverlaufenden Biegelinien gekürzt wird (weil dort aufgrund der Querschnittsschwächung das Trennen des Material besonders einfach, z.B. nur durch mehrmaliges Hin- und Herbiegen des Blechs um die Biegelinie), so erhält man wegen der Biegelinienabstände nur Bleche in einem abgestuftes Längenraster, so daß bei der gebogenen Stützhülse im allgemeinen ein Längsspalt verbleibt.

Die bei einer Biegung des mit Biegelinien versehenen Blechs entstehende Hülse hat keinen genau kreisrunden Querschnitt, sondern ähnelt im Querschnitt einem Vieleck (genauer handelt es sich z.B. um eine Zusammensetzung von gekrümmten und geraden Abschnitten). Da die Hülse u.a. als auf dem Leiterpotential liegende Elektrode dient und die Aufgabe hat, die von ihr umgebene Preßhülse elektrisch abzuschirmen, hätte der Fachmann nicht daran gedacht, eine Hülse mit solchen Abweichungen von der runden Querschnittsform und ggf. dem genannte Längsspalt für eine solche Elektrode zu verwenden. Überraschenderweise hat sich aber gezeigt, daß die genannte Abweichung von der Kreisform und der ggf. vorhandene Längsspalt die Funktion der Stützhülse nicht in inakzeptabler Weise beeinträchtigen, was auf die Wirkung des über ihr angeordneten Feldsteuerelements zurückzuführen sein dürfte.

Wie erwähnt, kann das Blech für zu biegende Hülsen für unterschiedliche Aderdurchmesser verwendet werden. Bei einigen der Ausführungsformen ist daher die Breite des Blechs den Umfang des größten zu erfassenden Aderdurchmessers angepaßt. Hochspannungsmuffen für verschiedene Aderdurchmesser können dann mit Stützhülsen-Blechen gleicher Abmessungen geliefert werden. Bei der Installation einer Hochspannungsmuffe für einen kleineren Aderdurchmesser ist das Blech dann dem entsprechend kleineren Umfang zu kürzen, was auf einfache Weise entlang einer der Biegelinien erfolgen kann, z.B. durch Abbrechen des Blechs durch Wechselbiegungen längs der Biegelinie. Aufgrund der diskreten Biegelinienabstände läßt sich auf die genannte Weise nicht jeder gewünschte Umfang genau passend erreichen; eine entstehende Längslücke hat jedoch maximal die Breite eines Streifens zwischen zwei Biegelinien. Wie erwähnt beeinflußt auch eine solche Lücke die Funktion der Stützhülse nicht in inakzeptabler Weise, u.a. wegen des hierüber angeordneten Feldsteuerelements.

Mit einer Hochspannungsmuffe der vorliegenden Art läßt sich also eine Hochspannungsverbindung mit folgenden Schritten herstellen: Zunächst werden die Leiter der zu verbindenden Adern in einem Endbereich abisoliert. Dann werden die abisolierten Leiter durch ein Leiterverbindungsteil, z.B. eine Preßhülse elektrisch und mechanisch miteinander verbunden. Eine Stützhülse, die auf den Enden der Aderisolierungen aufliegt und diese gewissermaßen über den abisolierten Verbindungsbereich fortsetzt, wird durch Biegen eines mit Biegelinien versehenen Bleches um diesen abisolierten Bereich hergestellt. Bei Adern kleineren Durchmessers wird das Blech, wenn nötig, gekürzt, wobei das Kürzen vorteilhaft längs einer der Biegelinien erfolgt, beispielsweise durch Abbrechen des Blechs in der Biegelinie. Schließlich wird der (zuvor auf einer der beiden Adern geparkte) Isolierkörper der Hochspannungsmuffe mit dem darin liegenden Feldsteuerelement über die Stützhülse, und somit den Verbindungsbereich, geschoben.

Grundsätzlich ist es möglich, das Feldsteuerelement direkt an einen oder beide Leiter der zu verbindenden Adern anzuschließen, um es auf das Leiterpotential zu bringen. Bei einigen der Ausführungsformen ist eine andere Lösung gewählt, bei welcher die Stützhülse in eingebautem Zustand auf dem Leiterpotential liegt und wiederum in elektrischem Kontakt mit dem sie umgebenden Feldsteuerelement steht (letzteres wird z.B. dadurch erzielt, daß das Feldsteuerelement mit seiner leitenden oder halbleitenden inneren Oberfläche direkt auf der Stützhülse aufliegt). Durch diese Maßnahme wird das Feldsteuerelement indirekt, und zwar über die Stützhülse auf das Leiterpotential gelegt.

Bei einigen der Ausführungsformen ist die Stützhülse mit einem Verbindungsleiter, z.B. einer Litze, mit dem Leiterverbindungsteil oder einem der Hochspannungsleiter verdrahtet. Bei anderen Ausführungsformen ist die Stützhülse mit wenigstens einem, nach innen gerichteten Federkontakt ausgerüstet. Dieser drückt in eingebauten Zustand der Stützhülse auf das Leiterverbindungsteil oder einen oder beide der abisolierten Hochspannungskabel-Leiter. Mit Hilfe des Federkontakts wird somit der gewünschte elektrische Kontakt automatisch bei der Montage der Hülse hergestellt. Ein gesonderter Arbeitsschritt für die Stützhülsen-Kontaktierung ist daher nicht erforderlich; sie ergibt sich vielmehr von selbst beim Biegen und Anbringen der Stützhülse. Das noch ungebogene Stützhülsen-Blech wird vorzugsweise bereits mit dem an geeigneter Stelle angeordneten Federkontakt geliefert, so daß vor Ort keine zusätzlichen Handgriffe für die Stützhülsenkontaktierung erforderlich sind.

Eine weitere vorteilhafte (aber wiederum nicht zwingende) Funktion der in den Ausführungsbeispielen beschriebenen Stützhülse ist die Aufnahme von Längskräften zwischen den Hochspannungskabeln, oder - genauer gesagt - zwischen den Aderisolierungen der zu verbindenden Adern. Zwar sind die Leiter der Adern i.a. bereits durch das Leiterverbindungsteil (z.B. die Preßhülse) mechanisch verbunden; allerdings treten bei Hochspannungskabeln wegen ohmscher Verluste im Betrieb relativ hohe Temperaturen auf, welche aufgrund unterschiedlicher Wärmeausdehnung von Leiter und Aderisolierung zu unerwünschten Verschiebungen der Aderisolierungen relativ zu den Leitern führen. Eine zusätzliche mechanische Verbindung der Aderisolierungen durch die Stützhülse verringert die Gefahr solcher Relativverschiebungen. Bei einigen der Ausführungsformen ist das Blech der an den die Stirnenden der Stützhülse bildenden Seiten (genannt "Stirnseiten") mit einem oder mehreren Vorsprüngen ausgerüstet, die zum formschlüssigen Eingriff in eine oder mehrere komplementäre Vertiefungen in der betreffenden Aderisolierung geeignet sind. Bei anderen der Ausführungsformen weist das Blech an den Stirnseiten Bohrungen auf, durch welche die Stützhülse mit Schrauben oder Stiften mit der betreffenden Aderisolierung verbindbar ist. Bei manchen Ausführungsformen sind beide Befestigungsarten in Kombination vorgesehen; es kommen also sowohl die Vertiefung(en) als auch durch Bohrungen reichende Schrauben oder Stifte zum Einsatz.

Nun zurückkommend auf Fig. 1 zeigt diese eine Hochspannungsmuffe 1 in einer schematischen Längsschnitt-Ansicht. Die Muffe 1 verbindet zwei Hochspannungsadern 2, die jeweils einen Leiter 3 und eine Aderisolierung 4 aufweisen. Auf der inneren Grenzfläche der Aderisolierung 4 zum Leiter 3 befindet sich eine innere Leitschicht 5, die auf dem Potential des Leiters 3 liegt. Entsprechend befindet sich auf der äußeren Oberfläche der Aderisolierung 4 eine äußere Leitschicht 6, die auf Erdpotential liegt. Die beiden Leitschichten 5, 6 definieren ein elektrisches Radialfeld in der Aderisolierung 4. An den Enden der beiden Adern 2 ist über einen kürzeren Abschnitt die Aderisolierung 4 mit der inneren Leitschicht 5 entfernt. Über einen etwas längeren Abschnitt ist zudem die äußere Leitschicht 6 von der Aderisolierung 4 entfernt. Der durch die Abisolierung der Leiterenden frei gewordene Raum bildet einen Hohlraum 7 (auch "Verbindungsraum" genannt), in dem die beiden abisolierten Leiterenden mit Hilfe eines Leiterverbindungsteils 8, z.B. einer Preßhülse elektrisch und mechanisch miteinander verbunden sind.

Eine Stützhülse 9 begrenzt den Verbindungsraum 7 nach außen. Sie liegt an ihren stirnseitigen Enden auf den Endbereichen der Aderisolierungen 4 der beiden Adern 2 auf. Zur formschlüssigen Verbindung mit den Aderisolierungen 4 weist sie an den Enden jeweils Vorsprünge 10 auf. Von den Endbereichen der Aderisolierung 4 ist vor der Installation der Muffe 1 Material abgetragen worden: Und zwar ist einerseits der Durchmesser der Aderisolierungen 4 um einen Betrag verringert worden, welcher der doppelten Wandstärke der Stützhülse 9 entspricht, so daß diese außen bündig mit der benachbarten (unbearbeiteten) Aderisolierung 4 abschließt. Die entsprechende Abstufung der Aderisolierung 4 ist mit 23 bezeichnet. Zum anderen sind in die Aderisolierung 4 zu den Vorsprüngen 10 komplementäre Vertiefungen 22 eingearbeitet worden, um die gewünschte formschlüssige Verbindung zur Stützhülse 9 herzustellen.

Ein Feldsteuerelement 11, welches auf Leiterpotential liegt, sitzt außen auf der Stützhülse 9. Es ist in einen noch weiter außen liegenden Isolierkörper 1 2 integriert, der das Feldsteuerelement 11 auch in Längsrichtung umschließt. Das Feldsteuerelement 11 und der Isolierkörper 12 sind aus dem gleichen Elastomermaterial, z.B. Silikongummi gefertigt. Das Material des Feldsteuerelements 11 ist jedoch durch leitende Zusätze halbleitend ausgebildet, während dasjenige des Isolierkörpers 12 isolierend ist. Auf der äußeren Oberfläche des Isolierkörpers 12 ist eine äußere Leitschicht 13 angeordnet, welche die äußere Leitschicht 6 der Adern 4 an den Enden des Isolierkörpers 12 kontaktiert und so über die Verbindungsstelle fortsetzt. Die äußeren Aderleitschichten 6 sind ungefähr ab dem Bereich, wo sie mit der äußeren Leitschicht 13 kontaktiert sind, entfernt; sie erstrecken sich also nicht wesentlich über diese Kontaktierungsstelle hinaus in Richtung zum Aderende. Nach außen ist der Isolierkörper 12 (samt äußerer Leitschicht 13) von einer Schutzhülle 14 umgeben. Alle genannten Teile sind im wesentlichen Rotationskörper um die Aderlängsachse.

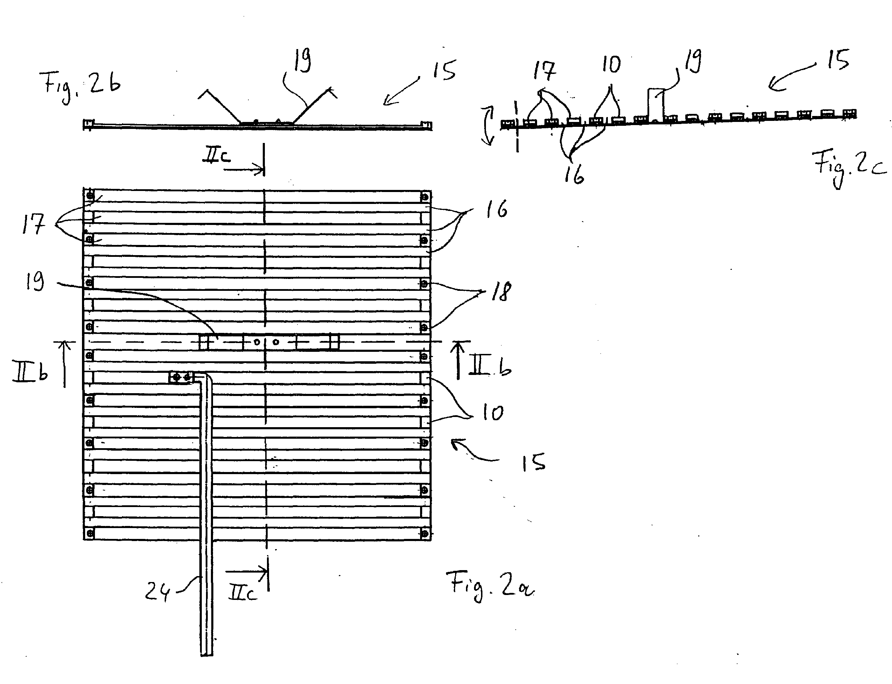

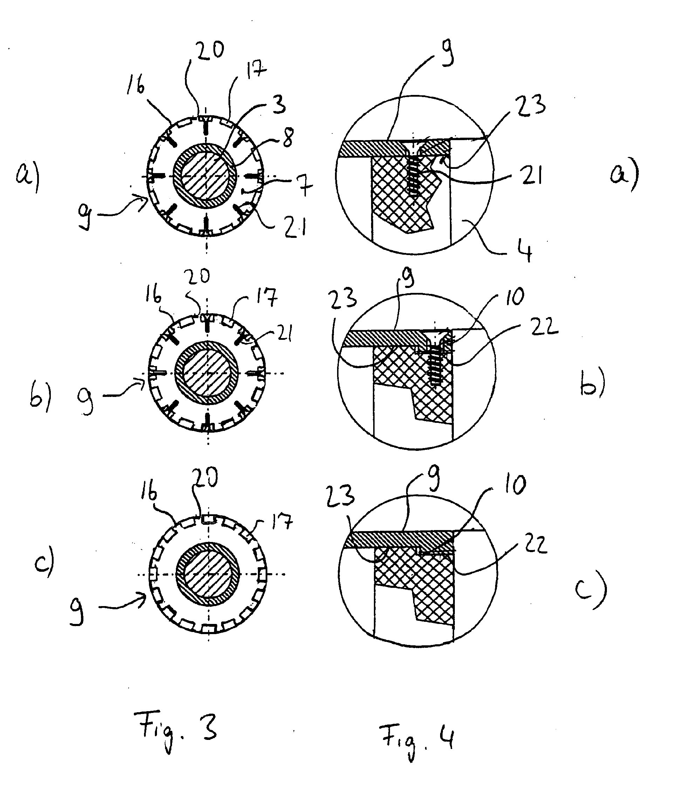

Fig. 2 zeigt verschiedene Ansichten eines Stützhülsenblechs 15 im noch nicht gebogenen Zustand; und zwar zeigt Fig. 2a eine Draufsicht, Fig. 2b einen Schnitt entlang der Linie IIb-IIb in Fig. 2a, und Fig. 2c einen Schnitt entlang der Linie IIc-IIc in Fig. 2a. Das Blech 15 wird zusammen mit den übrigen Teilen der Hochspannungsmuffe z.B. in der in Fig. 2 gezeigten ebenen Form geliefert, und erst bei der Installation zu der Stützhülse 9 mit im wesentlicher kreiszylindrischer Querschnittsform gebogen, die z.B. in Fig. 3 veranschaulicht ist. Gegebenenfalls wird das Blech 15 bei der Installation der Muffe zwecks Anpassung an den Aderumfang der zu verbindenden Adern gekürzt, was ebenfalls anhand von Fig. 3 veranschaulicht wird. Die Schnittlinie IIb-IIb in Fig. 2 verläuft parallel zur Längsachse der zu biegenden Stützhülse 9, und die Schnittlinie IIc-IIc verläuft quer zur Längsachse.

In dem Stützhülsenblech 15 sind nebeneinander mehrere in Längsrichtung verlaufende Biegelinien 16 in Form von Querschnittsschwächungen vorgesehen, welche ein einfaches Biegen des Blechs 15 zur Stützhülse 9 erlauben. Darüber hinaus ermöglichen die Biegelinien 16 auch ein einfaches Kürzen des Blechs 15, z.B. indem dieses durch mehrfaches Wechselbiegen längs einer der Biegelinien 16 abgebrochen wird (Dies ist in Fig. 2c durch einen Doppelpfeil veranschaulicht). Bei dem in Fig. 2 dargestellten Ausführungsbeispiel sind die Biegelinien 16 durch Ausfräsungen in dem Blech 15 hergestellt, welche zur Innenseite der zu biegenden Stützhülse 9 angeordnet sind und z.B. einen rechtwinkeligen Querschnitt haben. Die Breite der Ausfräsungen ist einerseits ausreichend gewählt, um ein Berühren von nicht weggefrästen Stegen 17 beim Biegen zur Stützhülse 9 zu vermeiden und ausreichend große Krümmungsradien der in den Ausfräsungen verbliebenen Wandung zu gewährleisten. Andererseits ist der Querschnitt des Blechs 15 nicht zu stark durch die Ausfräsungen zu schwächen, da die Stützhülse 9 die Aufweitungskräfte des Isolierkörpers 12 ohne wesentliche Durchbiegung aufnehmen soll. Vorzugsweise beträgt die Breite der Ausfräsungen der Biegelinien 17 das 0,5-bis 1,5-fache der Breite der Stege 17. Der Abstand zweier Biegelinien 16 (von deren Mittellinie zu Mittelline) liegt - absolut ausgedrückt - beispielsweise im Bereich von 10mm bis 30mm, oder z.B. genauer im Bereich von 15mm bis 25mm. Relativ ausgedrückt hat das Blech 15 z.B. zehn bis zwanzig Biegelinien 17, und genauer z.B. dreizehn bis siebzehn Biegelinien 17.

An den Stirnseiten des Blechs 15 haben die Stege 17 die bereits oben genannten Vorsprünge 10, welche sich zur Innenseite der zu biegenden Stützhülse erstrecken und der formschlüssigen Verbindung der Stützhülse mit der Aderisolierung der zu verbindenden Adern dienen. Zusätzlich ist das Blech 15 an den Stirnseiten mit Schraublöchern 18 versehen, welche eine zusätzliche Schraubverbindung der Stützhülse mit den Aderisolierungen der zu verbindenden Adern erlauben. Bei der Ausführungsform der Fig. 2 sind Schraublöcher 18 am Ort jedes zweiten der Stege 17 (jeweils an den Vorsprüngen 10) vorgesehen, bei anderen Ausführungsformen kommen die Schraublöcher häufiger vor, z.B. jeden Steg.

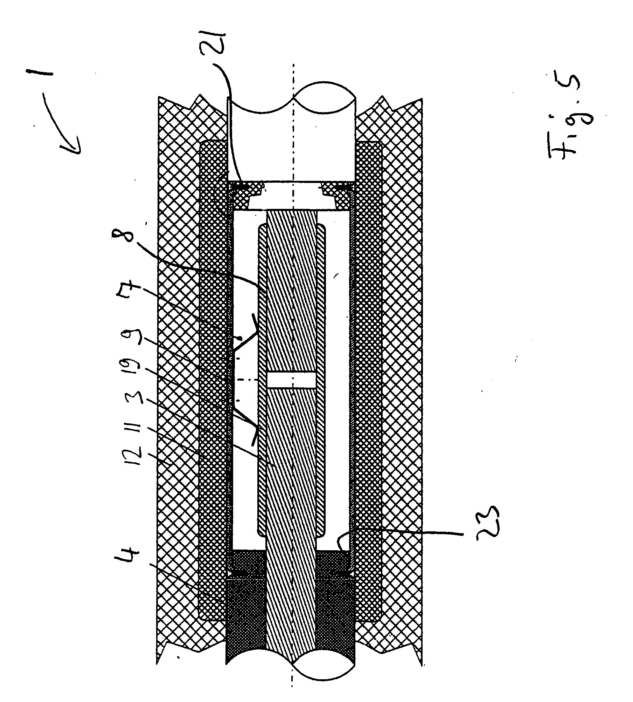

Das Stützhülsenblech 15 ist bei der in Fig. 2 dargestellten Ausführungsform zudem mit einem Federkontakt 19 ausgerüstet, welcher sich ebenfalls zur Innenseite der zu biegenden Stützhülse erstreckt und bei der dargestellten Ausführungsform im wesentlichen die Form eines "V" mit abgeknickten Schenkeln hat. Die Funktion dieses Federkontaktes 19 wird anhand Fig. 5 näher veranschaulicht. Am Ort des Federkontaktes 19 ist eine etwas breitere Ausfräsung 16 vorgesehen, und beide an diese angrenzenden Stege 17 sind mit Schraublöchern 18 versehen.

Fig. 2 veranschaulicht gleichzeitig eine andere Ausführungsform, bei der zur Verbindung der Stützhülse 9 mit dem Leiterpotential statt des Federkontakts 19 oder zusätzlich zu diesem eine Litze 24 vorgesehen ist, die beispielsweise an einem Steg 17 am Stützhülsenblech 15 befestigt (z.B. verschraubt oder vernietet) ist. Bei der Montage der Stützhülse 9, bevor diese zum geschlossenen Zylinder gebogen wird, wird die Litze 24 am Leiter 3 (z.B. mit einer Kontaktrollfeder) oder am Leiterverbindungsteil 8 (z.B. mit einer Schraube) befestigt.

Fig. 3 veranschaulicht, wie das ebene Blech 15 von Fig. 2 um den Verbindungsraum 7 gebogen wird, um eine im wesentlichen kreiszylindrische Stützhülse 9 zu bilden. Genau genommen entspricht die Querschnittsform der Stützhülse 9 nicht derjenigen eines Kreises, sondern setzt sich abwechselnd aus gekrümmten Abschnitten (im Bereich der Biegelinien 16) und geraden Abschnitten (im Bereich der Stege 17) zusammen. Außerdem ist der Zylinder nicht geschlossen, sondern weist einen Längsspalt 20 auf. In Fig. 3 ist kein Federkontakt dargestellt; außerdem sind die dort gezeigten Stützhülsen aus einem Stützhülsenblech 15 mit periodischer Abfolge von Biegelinien 16 und Stegen 17 mit gleichen Abständen aufgebaut (im Unterschied zu dem in Fig. 2 gezeigten Beispiel eines Stützhülsenblechs, bei dem am Ort des Federkontakts eine etwas breitere Ausfräsung vorgesehen ist, deren beide angrenzenden Stege mit Schraublöchern versehen sind).

Fig. 3 veranschaulicht außerdem eine bei der Installation erfolgte Kürzung des Stützhülsenblechs 15 entlang einer der Biegelinien 16. Beispielsweise sei, ausgehend von einem Blech 15 mit insgesamt 9 Schraublöchern 18 (ähnlich Fig. 2), bei der Installation der äußerste Steg 17 mit dem letzten Schraubloch 18 längs der zum nächsten Steg 17 angeordneten Biegelinie 16 abgebrochen worden (wie in Fig. 2c mit dem Doppelpfeil angedeutet), so daß die Stützhülse 9 nun auf der einen Seite des Längsspalts 20 einen Steg 17 mit Schraublöchern 18 und auf der anderen Seite einen Steg 17 ohne solche Schraublöcher aufweist.

Die Fig. 3 und 4 veranschaulichen in drei jeweils zusammengehörigen Ansichten (a bis c) verschiedene Ausführungsformen mit unterschiedlicher mechanischer Verbindung von Stützhülse 9 und Aderisolierung 4. In den Ansichten der Fig. 4 ist dabei jeweils ein Ausschnitt eines Längsschnitts der installierten Hochspannungsmuffe dargestellt, welcher die besagte mechanische Verbindung im Detail darstellt. Dabei zeigen die Figuren 3b und 4b eine Ausführungsform ähnlich Fig. 2a, bei der die mechanische Verbindung durch eine Kombination von einerseits Vorsprüngen 10 und komplementären Vertiefungen 22 und andererseits Schrauben 21 gebildet ist, die durch die Schraublöcher 18 in die Aderisolierung 4 eingreifen. Das Ausführungsbeispiel der Fig. 3c und 4c zeigt eine mechanische Verbindung, die nur auf den Vorsprüngen 10 und komplementären Vertiefungen 22 beruht, jedoch keine zusätzliche Schraubverbindung verwendet. Die Ausführungsform der Fig. 3a und 4a verwendet hingegen nur eine Schraubverbindung, jedoch keine Vorsprünge mit Vertiefungen. Diese letztgenannte Ausführungsform erlaubt es, zur Herstellung des Stützhülsenblechs 15 von einem vollständig ebenen Blech auszugehen und in ein solches die Biegelinien einzuarbeiten, z.B. einzufräsen, während die beiden anderen Ausführungsformen, z.B. ein Blech mit vorspringenden Kanten an den Stirnseiten erfordern (auch ein solches Blech ist z.B. durch eine Fräsbearbeitung eines ebenen Blechs erhältlich).

Bei allen drei in Fig. 3 und 4 gezeigten Ausführungsformen wird die Aderisolierung 4 vor der Montage der Stützhülse 9 so bearbeitet, daß in demjenigen Bereich, in dem die Stützhülse 9 auf der Aderisolierung 4 aufliegt, eine Abstufung 23 entsteht. Die Tiefe dieser Abstufung entspricht im wesentlichen der Dicke des Stützhülsenblechs 15, so daß der Durchmesser der Stützhülse 9 im wesentlichen demjenigen der Aderisolierung 4 (im Bereich außerhalb der Abstufung 23) entspricht und somit die Stützhülse 9 eine mit der Aderisolierung 4 bündige Überbrückung des Verbindungsraums 7 (Fig. 1 und 5) bildet.

Fig. 5 veranschaulicht die Kontaktierung der Stützhülse 9 mit dem Leiterverbindungsteil 8 anhand eines Ausschnitts aus einem Längsschnitt einer Hochspannungsmuffe 1. Der am Stützhülsenblech 15 vormontierte Federkontakt 19 wird beim Aufsetzen und Biegen des Stützhülsenblechs 15 zur Stützhülse 9 automatisch in federnde Auflage auf das Leiterverbindungsteil 8 gebracht. Der hierdurch geschaffene elektrische Kontakt bringt die Stützhülse 9 auf Leiterpotential. Da das halbleitende Feldsteuerelement 11 an dessen innerer Oberfläche auf der elektrisch leitenden Stützhülse 9 aufliegt und diese kontaktiert, liegt somit das Feldsteuerelement 11 auf Leiterpotential.

Da die bislang im Stand der Technik teilweise übliche Herstellung vorgeformter Stützhülsen (und zwar eventuell verschiedener Stützhülsen für jeden vorkommenden Aderdurchmesser) einen nennenswerten Teil des Gesamtaufwands für die Herstellung einer Hochspannungsmuffe ausmachte, erlauben die beschriebenen Ausführungsformen eine beträchtliche Aufwandsverringerung. Auch gegenüber bekannten Vorschlägen zur Verwendung von Blechhülsen bringen die beschriebenen Ausführungsformen Vereinfachungen hinsichtlich der Montage und der Anpaßbarkeit an verschiedenen Aderdurchmesser.

## Patentansprüche

1. Hochspannungsmuffe (1) zur Verbindung von Hochspannungskabeln, umfassend:
einen Isolierkörper (12);
ein, in dessen Inneren liegendes Feldsteuerelement (11);
eine Stützhülse (9) zur Abstützung des Feldsteuerelements (11) nach innen gegen einen Raum (7) zur Aufnahme eines Leiterverbindungsteils (8), wobei die Stützhülse (9) aus Blech gefertigt ist;
**dadurch gekennzeichnet, daß**
das Blech der Stützhülse (9) ein mit Biegelinien (16) versehenes Blech (15) ist.

2. Hochspannungsmuffe nach Anspruch 1, welche eine Längsachse aufweist, und bei welcher die Biegelinien (16) in dem Stützhülsen-Blech (15) so orientiert sind, daß sie im eingebauten Zustand der Stützhülse (9) parallel zur Längsachse verlaufen.

3. Hochspannungsmuffe nach Anspruch 1 oder 2, bei welcher die Biegelinien (16) durch Ausfräsungen in dem Blech (15) der Stützhülse (9) hergestellt sind.

4. Hochspannungsmuffe nach einem der Ansprüche 1 bis 3, bei welcher die Stützhülse (9) in eingebautem Zustand auf Leiterpotential liegt und in elektrischem Kontakt mit dem sie umgebenden Feldsteuerelement (11) steht, so daß auch dieses auf Leiterpotential liegt.

5. Hochspannungsmuffe nach Anspruch 4, bei welcher die Stützhülse (9) mit wenigstens einem, nach innen gerichteten Federkontakt (19) ausgerüstet ist, welcher so eingerichtet ist, daß er in eingebautem Zustand das Leiterverbindungsteil (8) oder einen Hochspannungskabel-Leiter (3) kontaktiert.

6. Hochspannungsmuffe nach einem der Ansprüche 1 bis 5, bei welcher die Stützhülse (9) mit den Hochspannungskabeln so verbindbar ist, daß sie Längskräfte zwischen den Hochspannungskabeln aufnehmen kann.

7. Hochspannungsmuffe nach Anspruch 6, welcher das Blech (15) der Stützhülse (9) an dessen stirnseitigem Ende mit einem oder mehreren Vorsprüngen (10) ausgerüstet ist, die zum formschlüssigen Eingriff in eine bzw. mehrere komplementäre Vertiefungen (22) in einer Hochspannungskabel-Isolierung (4) geeignet sind.

8. Hochspannungsmuffe nach Anspruch 6, bei welcher das Blech (15) der Stützhülse (9) an dessen stirnseitigem Ende Bohrungen (18) aufweist, durch welche die Stützhülse (9) mit Schrauben (21) oder Stiften mit einer Hochspannungskabel-Isolierung (4) verbindbar ist.

9. Verfahren zur Herstellung einer Hochspannungskabelverbindung, umfassend folgende Schritte:
Abisolieren von Leitern (3) von zu verbindenden Hochspannungsadern (2) im Verbindungsbereich;
Verbinden der abisolierten Leiter (3) durch ein Leiterverbindungsteil (8);
Aufbringen einer Stützhülse (9) durch Biegen eines mit Biegelinien (16) versehenen Bleches (15) um den Verbindungsbereich;
Überschieben eines Isolierkörper mit einem Feldsteuerelement über die Stützhülse.

10. Verfahren nach Anspruch 9, bei welchem zu verbindende Adern (2) einen gegebenen Aderdurchmesser aufweisen, und
wobei zum Herstellen der Stützhülse (9) das Blech (15) auf eine dem Aderumfang bei dem gegebenen Aderdurchmesser ungefähr entsprechende Breite gebracht wird, indem das Blech (15) längs einer der Biegelinien (16) gekürzt wird.

11. Verwendung eines mit Biegelinien (16) versehenen Blechs (15) als Stützhülse (9) bei der Verbindung von Hochspannungskabeln mit einer Hochspannungsmuffe (1), welche folgendes umfaßt:
einen Isolierkörper (12);
ein in dessen Inneren liegendes Feldsteuerelement (11);
wobei die Stützhülse (9) zur Abstützung des Feldsteuerelements (11) nach Innen gegen einen Raum (7) zur Aufnahme eines Leiterverbindungsteils (8) dient; und
wobei die Stützhülse (9) durch Biegen des Blechs (15) gebildet wird.
